# EUROPEAN PATENT APPLICATION

(11) **EP 3 348 452 A1**
(43) Date of publication of application: **18.07.2018**
(21) Application number: 18150410.1
(22) Date of filing: 05.01.2018
(51) Int. Cl.: B62D 5/04

(54) **STEERING SYSTEM**

(30) Priority: 16.01.2017 IT 201700004014
(71) Applicant: OGNIBENE POWER S.P.A., 42124 Reggio Emilia (IT)
(72) Inventor: OGNIBENE, Claudio, 42121 REGGIO EMILIA (IT)
(74) Representative: Corradini, Corrado

(57) **Abstract**

A steering system (1) having an electric linear actuator (10) comprising: a casing (20) having an opening (50), and a stem (40) inserted in a sliding way in the opening (50) with respect to a sliding axis (X) and having a first portion (45) which protrudes outwardly from said casing (20), wherein the opening (50) and the first portion (45) of the stem (40) are configured in such a way as to define a prismatic joint (80).

## Description

### TECHNICAL FIELD

The present invention relates to a steering system, in particular a steering system comprising an electric linear actuator equipped with a recirculating ball screw.

### PRIOR ART

Generally, steering systems comprise: at least a pair of lever mechanisms connected to the wheels of the vehicle on which the steering system itself is mounted, an electric linear actuator equipped with a stem the extremities of which are associated with said lever mechanisms, and a control mechanism adapted to govern the actuator.

By operating on the control mechanism, the actuator stem can be translated towards one or the other wheel, tilting the wheels with respect to the direction of forward movement, so as to perform vehicle steering.

One known solution provides for the operation in translation of the stem to be performed by means of a recirculating ball screw system.

In particular, an outer thread (or more generally an outer helical groove) obtained on the stem lateral surface is coupled, by means of the interposition of balls, to a nut screw (meaning a body equipped with an inner thread).

The operation of the stem is performed by making the nut screw rotate, which puts the stem in translational movement along the axis of rotation of the nut screw.

In order for the stem to be able to translate, it must be secured so that it does not rotate around its own axis together with the nut screw or due to movements of the steering lever mechanisms which are transmitted to the stem.

For example, this problem is particularly evident in the field of agricultural machinery and earthmoving machines, where, due to steering geometry requirements, the extremities of the stem are connected to the steering lever mechanisms by means of ball joints, known as steering heads, which by their very nature cannot prevent the rotation of the stem with respect to its axis.

One object of the present invention is to overcome these drawbacks of prior art, in the context of a simple, rational and low-cost solution.

Such objects are achieved by the characteristics of the invention shown in the independent claim.

The dependent claims describe preferred and/or particularly advantageous aspects of the invention.

### DISCLOSURE OF THE INVENTION

The invention makes available a steering system having an electric linear actuator comprising: a casing having an opening, and a stem inserted in a sliding way in the opening with respect to a sliding axis and having a first portion which protrudes outwardly from said casing, wherein the opening and the first portion of the stem are configured in such a way as to define a prismatic joint. Thanks to this solution, the stem is prevented from revolving around itself, thus ensuring its correct operation.

According to one aspect of the invention, the actuator can comprise: an electric motor, housed in the casing, which has a stator and a rotor axially hollow and coaxial with the stem, wherein the rotor can be operated in rotation with respect to an axis of rotation parallel to the sliding axis, an axially hollow cylindrical body, which is integral in rotation with the rotor and has an inner thread, an outer helical groove integral with the stem and coupled to the inner thread, a plurality of balls interposed between said outer helical groove and the inner thread of the cylindrical body for the coupling of the inner thread to the outer helical groove, and recirculating means for the recirculation of the balls.

This way, a compact electric actuator is made available, wherein the transmission of the motion by the motor to the stem ensures high efficiency and low losses due to friction.

Preferably, the first portion of the stem can have cross-section of non-circular shape, the opening having complementary cross-section with respect to the shape of the cross-section of the first portion.

According to a further aspect of the invention, the first portion can comprise a flat surface, which lies on a plane parallel to the sliding axis and is adapted to slide on a conjugated flat surface obtained in the opening.

This way the prismatic joint is easy and inexpensive to make.

According to another aspect of the invention, the stem can comprise a second portion which extends the first portion axially and is contained inside the casing, the second portion being of substantially cylindrical shape and the stem comprising a fillet surface adapted to fillet the flat surface and the second portion.

Said fillet surface, not being able to slide through the opening, advantageously acts as an end-of-stroke element thus preventing excessive steering of the wheels.

According to a further aspect of the invention, the flat surface of the stem can be delimited in direction perpendicular to the sliding axis by a pair of beveled and/or filleted edges.

Thanks to such solution, the wear is reduced of the gasket within which slides the first portion of the stem.

According to another aspect of the invention, the actuator can comprise a seal fixed to the casing and shaped so as to surround the first portion of the stem. This way foreign bodies are effectively prevented from entering the casing and the lubricant fluids contained in the casing are prevented from coming out. Advantageously, the seal can have an annular shape with a central hole with a shape homologous to the shape of the opening.

According to a further aspect of the invention, the steering system can comprise a ball joint, a portion of which is fixed to a free extremity of the first portion of the stem protruding from the casing.

This way, the steering system can be used in the field of agricultural machinery.

According to another aspect of the invention, the steering system can comprise a steering axle mechanically connected to the free extremity of the first portion of the stem protruding from the casing.

The invention also makes available an electric linear actuator for steering systems comprising: a casing with an opening, a stem inserted in a sliding way in the opening with respect to a sliding axis and having a first portion which protrudes outwardly from said casing, wherein the opening and the first portion of the stem are configured so as to define a prismatic joint.

### BRIEF DESCRIPTION OF THE DRAWINGS

Further characteristics and advantages of the invention will appear evident by reading the following description provided by way of example, but not exhaustive, with the aid of the figures on the attached tables.
Figure 1 is a perspective view of an actuator according to the invention.
Figure 2 is a side view of the actuator of figure 1.
Figure 3 is a section view of the actuator of figure 2 according to the plane III-III
Figure 4 is an exploded view of a detail of the actuator of figure 1.
Figure 5 is a perspective view of a head of the actuator.
Figure 6 is a diagram of a steering system according to the invention.

### BEST WAY OF CARRYING OUT THE INVENTION

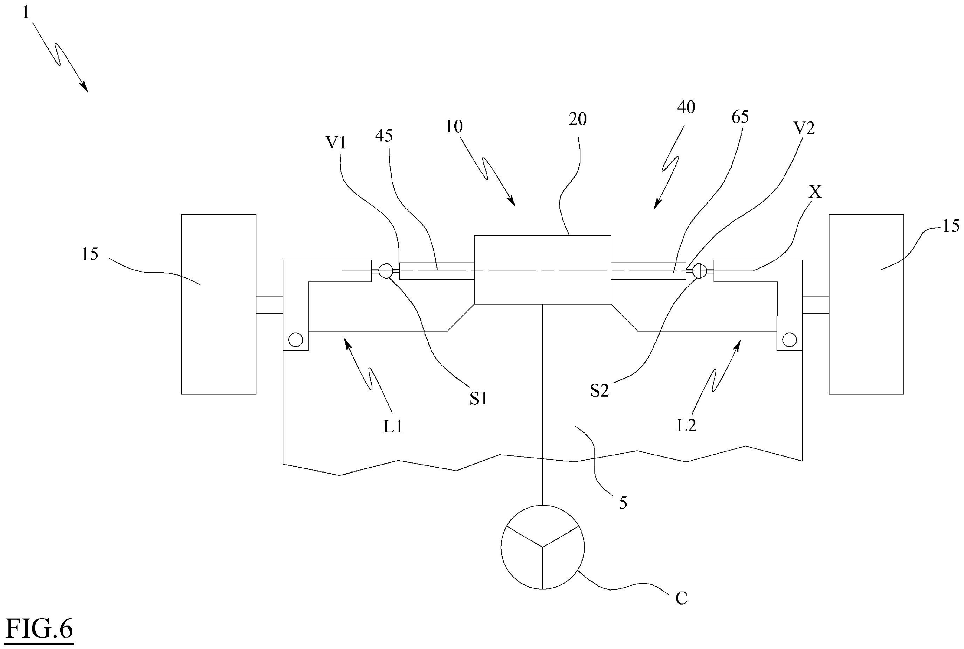

With particular reference to figure 6, globally indicated by 1 is a steering system for a vehicle equipped with a pair of steering wheels 15.

The steering system comprises a first steering lever mechanism L1 connected to a wheel 15, a second steering lever mechanism L2 connected to another wheel 15, an electric linear actuator 10 adapted to operate one of the two steering lever mechanisms L1,L2 and a control mechanism C adapted to govern the actuator 10.

Alternatively, the steering system can comprise an actuator 10 for each steering lever mechanism L1,L2.

The actuator 10 comprises a casing 20 having a tubular portion 25 (of elongated shape), which, for example, has a rectangular cross section and can be obtained by an aluminum extrusion.

The tubular portion 25 is intended to be fixed to a frame 5 of the vehicle.

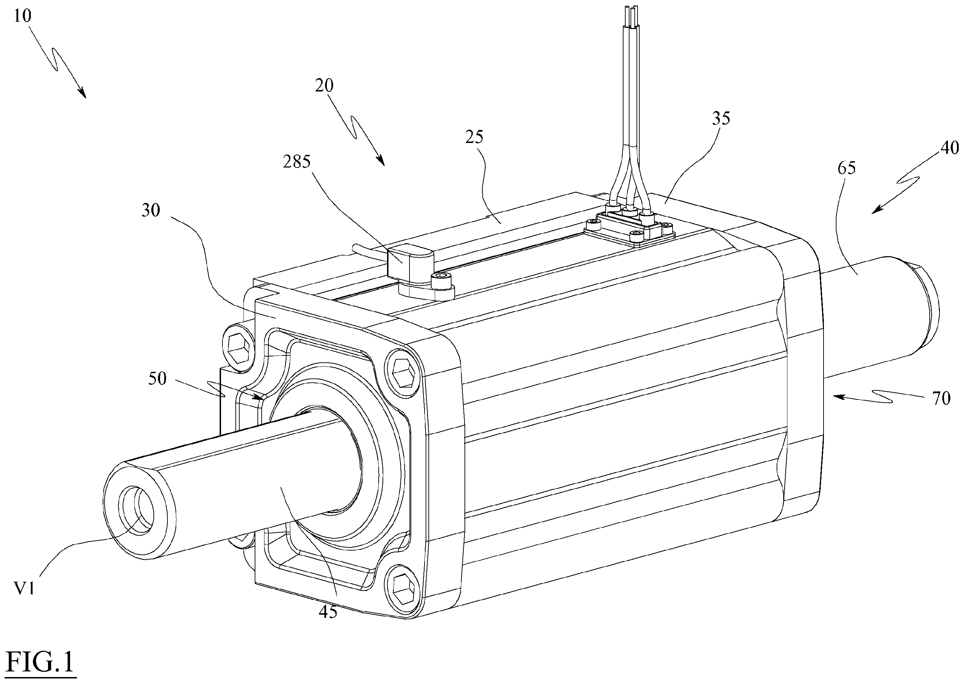

As shown in figure 1, the casing 20 also comprises a first head 30 and a second head 35 adapted to close the open extremities of the tubular portion 25. The first head 30 and the second head 35 are fixed to the tubular portion 25, e.g., by means of threaded parts.

The first head 30 and the second head 35 can be made of high-tensile steel, e.g., having a hardening surface treatment over the entire surface of the head 30,35.

The casing 20 can furthermore comprise a plurality of cooling fins (not shown in the drawings) arranged on its outer surface.

The actuator 10 comprises a stem 40 associated in a sliding way with the casing 20 according to a sliding axis X, and having at least one extremity which protrudes outwardly from said casing 20.

The sliding axis X is parallel to a longitudinal axis of the stem 40 and to a longitudinal axis of the tubular portion 25 of the casing 20.

The stem 40 has a first portion 45 which protrudes outwardly, at least in part, from the casing 20 and is inserted in a sliding way with reduced play in a cylindrical opening 50 obtained in the first head 30. Further characteristics of the first portion will be described herein below.

The first head 30 can comprise a bush that defines the opening 50 (not shown in the drawings).

The bush can be made of high-tensile steel having a hardening surface treatment, e.g., nitriding.

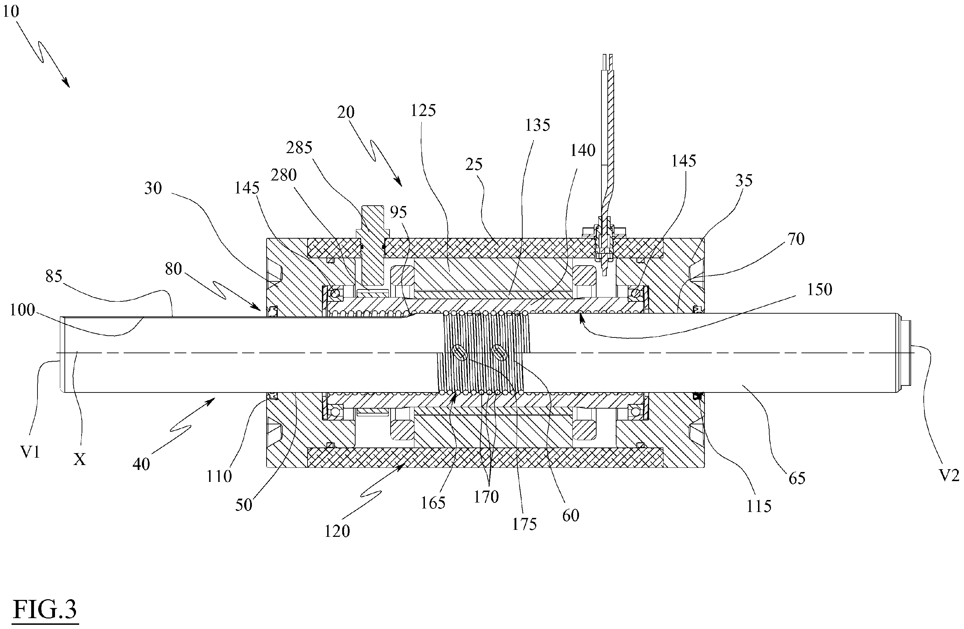

The stem 40 also comprises a second portion 60, e.g. with cylindrical shape, side by side with the first portion 45 and contained inside the casing 20 (see fig. 3).

I.e., the second portion 60 does not cross the first head 30 and the second head 35.

The first portion 45, and the opening 50 are configured so as to define a prismatic joint 80 having a sliding axis coinciding with the sliding axis X.

In particular, the first portion 45 of the stem 40 comprises a flat surface 85, which lies on a plane parallel to the sliding axis X and is adapted to slide on a conjugated flat surface 90 obtained in the opening 50.

The flat surface 85 does not protrude with respect to the second portion 60 of the stem 40, i.e., the plane on which the flat surface 85 of the stem 40 lies intersects at two points an imaginary circumference which defines the perimeter of the cross section of the second portion 60 of the stem.

Advantageously, the flat surface 85 of the stem 40 extends along the entire axial length of the first portion 45, i.e., from the free extremity of the first portion 45 to the extremity of the first portion 45 proximal to the second portion 60.

Furthermore, the flat surface 90 of the opening 50 has a width (in direction perpendicular to the sliding axis X) substantially equal to the width (in direction perpendicular to the sliding axis X) of the flat surface 85 of the stem.

The stem 40 also comprises a fillet surface 95, e.g., concave, adapted to fillet the flat surface 85 of the stem 40 to the second portion 60 of the stem 40, i.e., to a cylindrical surface of the second portion 60.

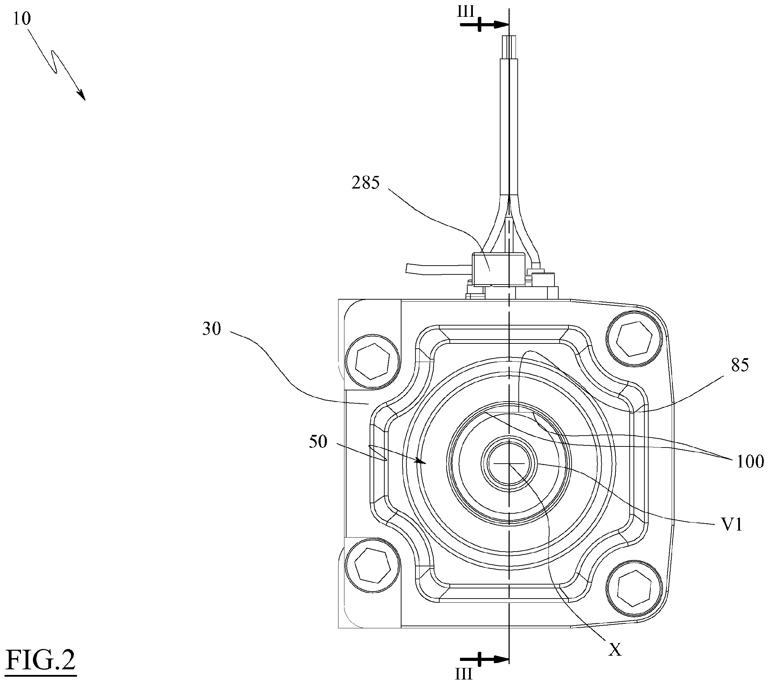

Finally, the flat surface 85 of the stem 40 is delimited in direction transversal to the sliding axis X by a pair of beveled edges 100 (see figures 1, 2 and 4).

In practice, the first portion 45 is delimited in radial direction by the flat surface 85, by the beveled edges 100 and by a portion of cylindrical surface 105 having longitudinal axis parallel to the sliding axis X and which extends circumferentially from one beveled edge 100 to the other.

The flat surface 85 of the stem 40 can for example be obtained by means of machining operations to remove shavings (milling) from a first portion 45 of cylindrical shape.

Alternatively, the prismatic joint 80 can be made by means of one or more radial protrusions, obtained and/or connected to the first portion 45 of the stem 40 and adapted to slide within respective complementary grooves obtained in the opening 50.

For example, the stem 40 can comprise a key housed in a seat obtained in the first portion 45 and adapted to slide in a complementary groove obtained in the opening 50.

A further alternative can envisage the presence of a plurality of flat surfaces 85, e.g., filleted so as to define a first portion 45 having a substantially polygonal cross section.

In the preferred embodiment shown in the drawings, the stem 40 also has a third portion 65, e.g., of cylindrical shape, which protrudes outwardly, at least in part, from the casing 20 and is inserted in a sliding way with reduced play in a cylindrical opening 70 obtained in the second head 35.

The second head 35 can comprise a bush that defines the opening 70 (not shown in the drawings).

The bush can be made of high-tensile steel having a hardening surface treatment, e.g., a nitriding surface treatment.

The third portion 65 is side by side with the second portion 60 from the extremity opposite the first portion 45.

The third portion 65 has a circular-shaped cross section.

Nevertheless it cannot be ruled out that the third portion 65 of the stem 40 and the opening 70 of the second head 35 can be configured to define a further prismatic joint identical to that described above.

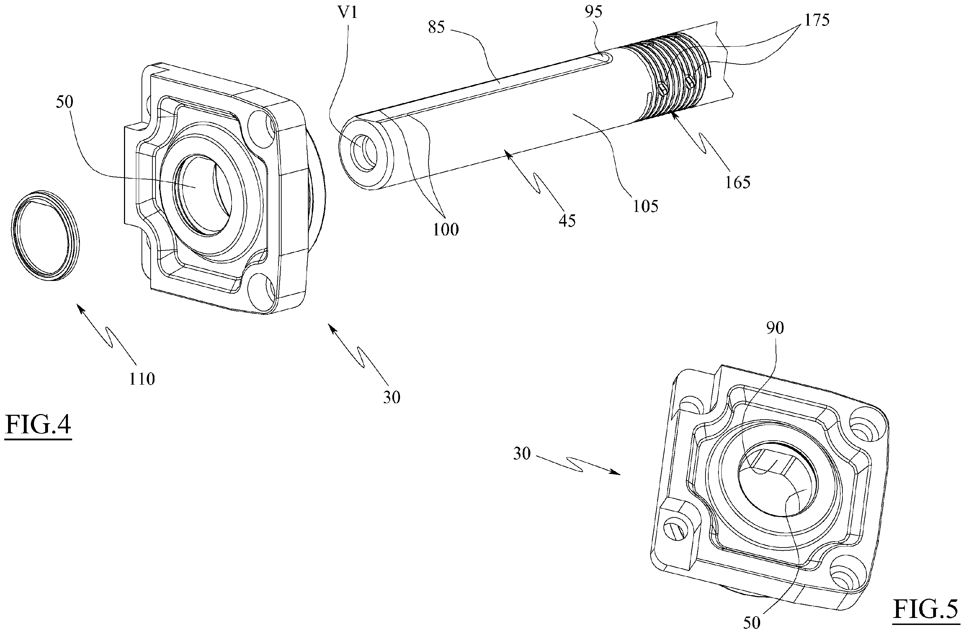

In the preferred embodiment of figures 3 and 4, the stem 40 has a circular-shaped cross section and constant along the entire axial extension of the stem itself comprised between the free extremity of the third portion 65 and the extremity of the second portion 60 in contact with the first portion 45.

The first portion 45, the second portion 60 and the third portion 65 are made in a single body.

The steering system 1 comprises a pair of ball joints S1,S2 an extremity of which is screwed into a respective threaded blind hole V1,V2 obtained at a free extremity of the stem 40.

At the opposite extremity each ball joint S1,S2 is connected to a respective steering lever mechanism L1,L2.

The stem 40 can be made of high-tensile steel, preferably C45, and can for example receive a hardening surface treatment.

The surface treatment can for example be a treatment with the addition of material, in particular an electrodeposition or plasma chrome-plating treatment or thermochemical treatment with subsequent oxidization.

Alternatively, the surface treatment with the addition of material can be a treatment providing the application of a ceramic layer, e.g., plasma or thermochemical coating with subsequent oxidization.

A further option envisages that the surface treatment be a thermochemical conversion treatment.

The actuator 10 comprises a first seal 110, housed in a seat obtained in a portion of the first head 30 external with respect to the opening 50, which is adapted to surround a part of the lateral surface of the first portion 45 of the stem 40.

The first seal 110 has an annular shape, e.g., having an outer perimeter of any shape, and has a central hole with shape homologous to the shape of the opening 50.

For example, the outer perimeter of the first seal 110 is of circular shape. Preferably, the central hole of the seal 110 has a smaller area than the area of the cross section of the first portion 45 of the stem 40.

A second seal 115 is housed in a seat obtained in a portion of the second head 35 external with respect to the opening 70 and is adapted to surround a part of the lateral surface of the third portion 65 of the stem 40.

The second seal 115 has an annular shape, with a central hole of circular shape.

The seals 110,115 can for example be lip seals having an outer lip, in direct contact with the stem 40 and adapted to remove foreign bodies on the stem 40, and an inner lip in direct contact with the stem 40 and adapted to prevent lubricant liquid or grease coming out from inside the casing 20.

The actuator 10 comprises an electric motor 120, which can be seen in figure 4, housed inside the casing 20, e.g., coaxial with the stem 40.

The electric motor 120 is for example of the synchronous three-phase type. The electric motor 120 comprises a stator 125 fixed to the tubular portion 25 of the casing 20.

The stator 125 comprises, as is known to the specialist in the field, a structure having a plurality of small packaged blades around which are wound coils connected to the power supply of the electric motor 120.

The electric motor 120 comprises a rotor 135 internally concentric to the stator 125 and associated in a revolving way with the casing 20 with respect to an axis of rotation substantially parallel to the sliding axis X.

The rotor 135 has a tubular body, e.g., with a circular cross section, and a plurality of permanent magnets arranged on the outer surface, i.e., turned towards the stator 125, of the tubular body.

The permanent magnets can, for example, be fixed to the tubular body by means of glues and/or threaded connections.

The actuator 10 comprises an axially hollow cylindrical body 140, which is integral in rotation with the rotor 135 and is coaxial with the stem 40.

The cylindrical body 140 is fully contained inside the casing 20, and, for example, is associated in a revolving way with the casing 20 by means of a pair of bearings 145.

The bearings 145 can for example be arranged at the axial extremities of the cylindrical body 140 and be housed in a suitable seat obtained in the respective head 30, 35.

Such cylindrical body 140 can have an axial extension substantially equal to or less than the distance between the cylindrical openings 50,70.

The cylindrical body 140 has an inner threading 150 (i.e., obtained on an inner surface of the cylindrical body 140 facing onto the stem 40), which extends along the entire axial dimension of the cylindrical body 140 itself and has a screwing-up axis coinciding with the central axis of the cylindrical body 140. The cylindrical body 140 can for example be made of a steel having greater hardness than the steel the stem 40 is made of.

Preferably the cylindrical body is made of 100Cr6.

The actuator 10 comprises an outer helical groove 165 obtained on the outer surface (i.e., turned towards the cylindrical body 140) of the stem 40, in particular of the second portion 60.

The outer helical groove 165 is wound around the central axis of the stem 40 and is coupled to the cylindrical body 140 by means of a plurality of balls 170 interposed between the outer helical groove 165 and the inner threading 150. Alternatively the actuator can comprise a further cylindrical body (not shown in the drawings) axially hollow and fitted on the stem 40, on which is obtained the outer helical groove 165.

Such further cylindrical body can have such overall dimensions in a radial direction that the head 30 defines an abutting element for said further cylindrical body, i.e., it has such overall dimensions as to be unable to slide with the stem 40 through the opening 50.

Moreover, the further cylindrical body can have such overall dimensions in a radial direction that the head 35 defines an abutting element for said further cylindrical body, i.e., it has such overall dimensions as to be unable to slide with the stem 40 through the opening 70.

The outer helical groove 165 extends around the axis of the stem 40 according to an angle of 360°, i.e., it forms an outer threading.

The actuator 10 comprises recirculating means 175 adapted to make the balls recirculate in the outer helical groove 165.

The actuator 10 also comprises an angular sensor having an element 280 fixed to the cylindrical body 140 and a sensor 285 adapted to read the element 280 and housed in a seat obtained in the tubular portion 25 of the casing 20.

The actuator 10 also comprises a linear sensor (not shown in the drawings) adapted to provide information relating to the axial position of the stem 40 along the sliding axis X.

Finally, the actuator 10, i.e. the casing 20, is at least partially filled with lubricant liquid.

Alternatively or in addition, the recirculating means 175 comprise a grease lubrication system.

The operation of the actuator 10 according to the invention is the following.

When the electric motor 120 is operated, the cylindrical body 140 is made to rotate around the central axis X and, because the stem 40 cannot rotate due to the prismatic joint 80, the rotary motion of the cylindrical body 140 is transformed into a translational motion of the stem 40 along the central axis X. The stem 40, in its translational motion, pushes one of the two lever mechanisms while it pulls the opposite one, thereby inclining the steering wheels 15 with respect to the direction of forward movement of the vehicle.

During the steering maneuver a check is made of the correct operation of the mechanism by means of the angular sensor and the linear sensor.

The invention so conceived is susceptible to numerous changes and variations all falling within the scope of the inventive concept.

Furthermore, all the details are replaceable with other technically equivalent elements.

In practice, the materials employed, as well as the contingent dimensions and shapes, may be any according to requirements without thereby abandoning the scope of protection of the following claims.

## Claims

1. A steering system (1) having an electric linear actuator (10) comprising:
- a casing (20) having an opening (50), and
- a stem (40) inserted in a sliding way in the opening (50) with respect to a sliding axis (X) and having a first portion (45) which protrudes outwardly from said casing (20),
wherein the opening (50) and the first portion (45) of the stem (40) are configured in such a way as to define a prismatic joint (80).

2. The steering system (1) according to claim 1, wherein the actuator (10) comprises:
- an electric motor (120), housed in the casing (20), which has a stator (125) and a rotor (135) axially hollow and coaxial with the stem (40), wherein the rotor (135) can be operated in rotation with respect to an axis of rotation parallel to the sliding axis (X),
- an cylindrical body (140) axially hollow, which is integral in rotation with the rotor (135) and has an inner thread (150),
- an outer helical groove (165) integral with the stem (40) and coupled to the inner thread (150);
- a plurality of balls (170) interposed between said outer helical groove and the inner thread of the cylindrical body for the coupling of the inner thread (150) to the outer helical groove (165), and
- recirculating means (175) for the recirculation of the balls (170).

3. The steering system (1) according to claim 1, wherein the first portion (45) of the stem has cross-section of non-circular shape, the opening (50) having complementary cross-section with respect to the shape of the cross-section of the first portion (45).

4. The steering system (1) according to any one of the preceding claims, wherein the first portion (45) comprises a flat surface (85), which lies on a plane parallel to the sliding axis (X) and is adapted to slide on a conjugated flat surface (90) obtained in the opening (50).

5. The steering system (1) according to claim 3, wherein the stem (40) comprises a second portion (60) which extends the first portion (45) axially and is contained inside the casing (20), the second portion (60) being of substantially cylindrical shape and the stem (40) comprising a fillet surface (95) adapted to fillet the flat surface (85) and the second portion (60).

6. The steering system (1) according to claim 4, wherein the flat surface (85) of the stem (40) is delimited in direction perpendicular to the sliding axis (X) by a pair of beveled edges (100).

7. The steering system (1) according to claim 1, wherein the actuator (10) comprises a seal (110) fixed to the casing (20) and shaped so as to surround the first portion (45) of the stem (40).

8. The steering system (1) according to claim 7, wherein the seal (110) has an annular shape with a central hole with a shape homologous to the shape of the opening (50).

9. The steering system (1) according to claim 1, which comprises a ball joint, a portion of which is fixed to a free extremity of the first portion (45) of the stem (40) protruding from the casing (20).

10. The steering system (1) according to claim 1, which comprises a steering axle (A) mechanically connected to the free extremity of the first portion (45) of the stem (40) protruding from the casing (20).

11. An electric linear actuator (10) for steering systems comprising:
- a casing (20) with an opening (50),
- a stem (40) inserted in a sliding way in the opening (50) with respect to a sliding axis (X) and having a first portion (45) which protrudes outwardly from said casing (20),
wherein the opening (50) and the first portion (45) of the stem (40) are configured so as to define a prismatic joint (80).
